# EUROPEAN PATENT SPECIFICATION

(11) **EP 3 339 174 B1**
(45) Date of publication and mention of the grant of the patent: **04.12.2019**
(21) Application number: 17207678.8
(22) Date of filing: 15.12.2017
(51) Int. Cl.: B64D 13/00, F28F 27/00, F28D 1/04, F28D 1/053, B60H 1/00, F28D 21/00

(54) **HEAT EXCHANGER HAVING EMBEDDED FEATURES**
WÄRMETAUSCHER MIT EINGEBETTETER AUSSTATTUNG
ÉCHANGEUR DE CHALEUR PRÉSENTANT DES CARACTÉRISTIQUES INTÉGRÉES

(30) Priority: 15.12.2016 US 201615380432
(43) Date of publication of application: 27.06.2018
(73) Proprietor: Hamilton Sundstrand Corporation, Charlotte, NC 28217-4578 (US)
(72) Inventor: KOWALSKI, John W., Hadley, Massachusetts 01035 (US); RHODEN, William E., Glastonbury, Connecticut 06033 (US)
(74) Representative: Dehns

(56) References cited:
- EP-A2- 2 711 297
- DE-A1- 2 258 134
- DE-A1-102011 105 968
- GB-A- 2 015 723
- US-A1- 2011 061 853

## Description

### BACKGROUND

Aircraft often include conditioning packs that provide cool air to the aircraft. Air or another fluid is drawn through heat exchangers of the conditioning packs. The heat exchangers may be air to air heat exchangers, liquid to air heat exchangers, or liquid to liquid heat exchangers. Pressure drop across the heat exchangers may reduce flow through the heat exchangers and reduce conditioning pack efficiency.

A heat exchanger for an aircraft according to the closest prior art is represented by EP-A-2711297.

### BRIEF DESCRIPTION

According to an embodiment of the present invention, a heat exchanger is provided. The heat exchanger includes a heat exchanger body having a first face, a second face disposed opposite the first face, a first wall, and a second wall disposed opposite the first wall. The first wall and the second wall each extend between the first face and the second face. The heat exchanger body defines a first transducer passageway and a second transducer passageway. The first transducer passageway extends from the first face towards the first wall. The second transducer passageway extends from the second face towards the first wall.

In addition to one or more of the features described herein, the first transducer passageway has a first transducer passageway first end that is disposed at the first face and a first transducer passageway second end that terminates at the pressure transducer interface.

In addition to one or more of the features described herein, the first transducer passageway first end defines a pressure transducer inlet port.

In addition to one or more of the features described herein, the second transducer passageway has a second transducer passageway first end that is disposed at the second face and a second transducer passageway second end that terminates at the pressure transducer interface.

In addition to one or more of the features described herein, the second transducer passageway second end defines a pressure transducer outlet port.

In addition to one or more of the features described herein, the first transducer passageway and the second transducer passageway is fluidly connected to the pressure transducer interface.

In addition to one or more of the features described herein, a heat exchanger core is disposed within the heat exchanger body.

In addition to one or more of the features described herein, the first transducer passageway and the second transducer passageway are spaced apart from the heat exchanger core.

According to another embodiment of the present invention, an aircraft heat exchanger is provided. The aircraft heat exchanger includes a heat exchanger core, a heat exchanger body, and a first transducer passageway. The heat exchanger body is at least partially disposed about the heat exchanger core. The heat exchanger body has a first wall, a second wall disposed opposite the first wall, a first face, and a second face disposed opposite the first face. The first face and the second face each extend between the first wall and the second wall. The first wall defines a pressure transducer interface. The first transducer passageway is disposed within the heat exchanger body and is spaced apart from the heat exchanger core. The first transducer passageway extends along the first face and the first wall towards the pressure transducer interface.

In addition to one or more of the features described herein, a second transducer passageway is disposed within the heat exchanger body and is spaced apart from the heat exchanger core. The second transducer passageway extends along the second face and the first wall towards the pressure transducer interface.

In addition to one or more of the features described herein, the first face defines a pressure transducer inlet port.

In addition to one or more of the features described herein, the pressure transducer inlet port is connected to the pressure transducer interface by the first transducer passageway.

In addition to one or more of the features described herein, the second face defines a pressure transducer outlet port.

In addition to one or more of the features described herein, the pressure transducer outlet port is connected to the pressure transducer interface by the second transducer passageway.

According to yet another embodiment of the present invention, a heat exchanger assembly is provided. The heat exchanger assembly includes a heat exchanger, a first header, and a second header. The exchanger has a heat exchanger core disposed within a heat exchanger body. The heat exchanger body has a first face that defines a pressure transducer inlet port, a second face that defines a pressure transducer outlet port, and a first wall that defines a pressure transducer interface. The first header defines a fluid inlet that is fluidly connected to a first portion of the heat exchanger core and abuts a first end of the first face, the second face, and the first wall. The second header defines a fluid outlet that is fluidly connected to a second portion of the heat exchanger core and abuts a second end of the first face, the second face, and the first wall.

In addition to one or more of the features described herein, the heat exchanger body defines a first transducer passageway that extends between the pressure transducer inlet port and the pressure transducer interface.

In addition to one or more of the features described herein, the first transducer passageway extends along the first face and the first wall.

In addition to one or more of the features described herein, the heat exchanger body defines a second transducer passageway that extends between the pressure transducer outlet port and the pressure transducer interface.

In addition to one or more of the features described herein, the second transducer passageway extends along the second face and the first wall.

### BRIEF DESCRIPTION OF THE DRAWINGS

The following descriptions should not be considered limiting in any way. With reference to the accompanying drawings, like elements are numbered alike:
FIG. 1 is a perspective view of a heat exchanger assembly; and
FIG. 2 is a perspective view of a heat exchanger core of the heat exchanger assembly.

### DETAILED DESCRIPTION

A detailed description of one or more embodiments of the disclosed apparatus and method are presented herein by way of exemplification and not limitation with reference to the Figures.

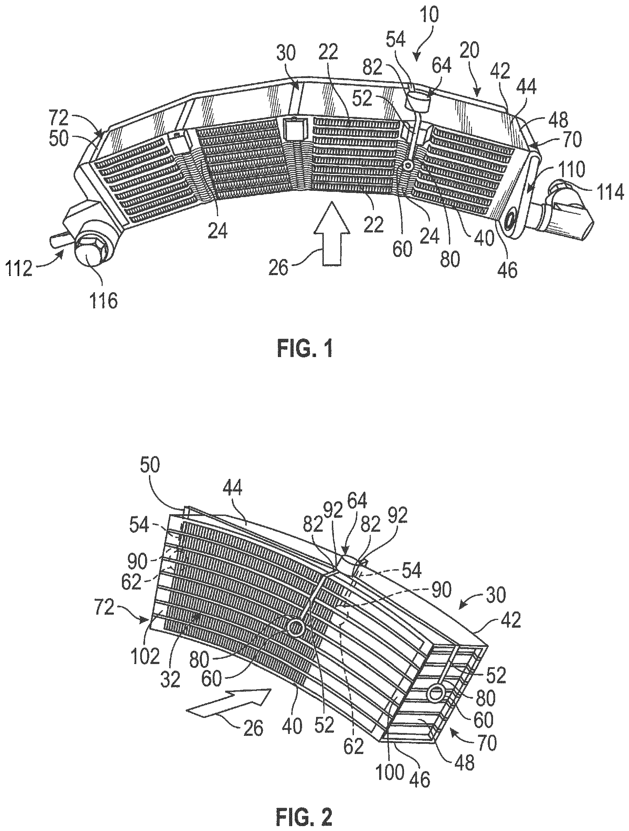

Referring to FIG. 1, an illustrative embodiment of a heat exchanger assembly 10 is shown. The heat exchanger assembly 10 may be provided with a vehicle such as an aircraft. The heat exchanger assembly 10 may be provided as part of an aircraft system such as an environmental control system, an aircraft cooling system, or the like.

The heat exchanger assembly 10 includes a heat exchanger 20. The heat exchanger 20 is an aircraft heat exchanger that is configured to receive cooling air that may flow or pass through openings 22 along a flow direction 26. The heat exchanger 20 is configured to cool a fluid that flows through the heat exchanger 20. In at least one embodiment, the heat exchanger assembly 10 includes multiple heat exchangers that abut each other and are sequentially arranged. The multiple heat exchangers may be separated from each other by a partition wall 24.

In at least one embodiment, the heat exchanger 20 includes a heat exchanger body 30 and a heat exchanger core 32. The heat exchanger core 32 is described in greater detail below.

The heat exchanger body 30 may at least partially define the openings 22. The heat exchanger body 30 includes a first face 40, a second face 42, a first wall 44, a second wall 46, a first sidewall 48, a second sidewall 50, a first transducer passageway 52, and a second transducer passageway 54.

The first face 40 may be a front surface of the heat exchanger body 30 that faces upstream or towards a flow direction 26 of the cooling air. The first face 40 may at least partially define the partition wall 24. The first face 40 defines a pressure transducer inlet port 60. The pressure transducer inlet port 60 extends at least partially through the first face 40. The pressure transducer inlet port 60 may be directly integrated into the first face 40. The pressure transducer inlet port 60 may be built into the first face 40 of the heat exchanger body 30 using an additive manufacturing process. The additive manufacturing process may be stereolithography, direct metal laser sintering, selective laser sintering, e-beam melting, e-beam wire, or the like.

In at least one embodiment, the pressure transducer inlet port 60 may include a first sensing element that is in communication with a control or monitoring system. The first sensing element may be configured to measure a pressure of or across the first face 40 or the first sidewall 48.

The second face 42 is disposed opposite the first face 40. The second face 42 may be a back surface of the heat exchanger body 30 that faces downstream or away from the flow direction 26 of the cooling air. The second face 42 defines a pressure transducer outlet port 62. The pressure transducer outlet port 62 extends at least partially through the second face 42. The pressure transducer outlet port 62 may be directly integrated into the second face 42. The pressure transducer outlet port 62 may be built into the second face 42 of the heat exchanger body 30 using an additive manufacturing process.

In at least one embodiment, the pressure transducer outlet port 62 may include a second sensing element that is communication with the control system. The second sensing element may be configured to measure a pressure of or across the second face 42 or the second sidewall 50. The first sensing element and the second sensing element enable the control system to determine a differential pressure across the heat exchanger assembly 10 or heat exchanger body 30.

The first wall 44 extends between distal portions of the first face 40 and the second face 42. The first wall 44 may be a top surface of the heat exchanger body 30 that is disposed substantially parallel to the flow direction 26 of the cooling air. The first wall 44 defines a pressure transducer interface 64. The pressure transducer interface 64 may be disposed on or within the first wall 44. The pressure transducer interface 64 may be configured as a pressure transducer interface block. The pressure transducer interface 64 may be built into the first wall 44 of the heat exchanger body 30 using an additive manufacturing process.

The pressure transducer interface 64 is arranged to receive a pressure sensor. The pressure sensor is configured to measure a pressure drop across the faces of the heat exchanger 20.

The second wall 46 is disposed opposite the first wall 44. The second wall 46 extends between proximal portions of the first face 40 and the second face 42. The second wall 46 may be a bottom surface of the heat exchanger body 30 that is disposed substantially parallel to the flow direction 26 of the cooling air.

The first sidewall 48 is disposed at a first end 70 of the heat exchanger body 30 that is defined at least partially by the first face 40, the second face 42, the first wall 44, and the second wall 46. The first sidewall 48 extends between the first face 40, the second face 42, the first wall 44, and the second wall 46. In at least one embodiment, the first sidewall 48 defines at least one of the pressure transducer inlet port 60 and the pressure transducer outlet port 62.

The second sidewall 50 is disposed at a second end 72 of the heat exchanger body 30 that is disposed opposite the first end 70 of the heat exchanger body 30. The second end 72 is defined at least partially by the first face 40, the second face 42, the first wall 44, and the second wall 46. The second sidewall 50 extends between the first face 40, the second face 42, the first wall 44, and the second wall 46. In at least one embodiment, the second sidewall 50 defines at least one of the pressure transducer inlet port 60 and the pressure transducer outlet port 62.

Referring to FIGS. 1 and 2, the first transducer passageway 52 is disposed within and is defined by the heat exchanger body 30. The first transducer passageway 52 may be formed using an additive manufacturing process. The first transducer passageway 52 is spaced apart from the heat exchanger core 32. In at least one embodiment, the first transducer passageway 52 is disposed between the heat exchanger body 30 and the heat exchanger core 32.

The first transducer passageway 52 extends between and fluidly connects the pressure transducer inlet port 60 and the pressure transducer interface 64. As arranged, the first transducer passageway 52 may extend from and along the first face 40 and/or the first sidewall 48 towards and along the first wall 44.

The first transducer passageway 52 extends between a first transducer passageway first end 80 and a first transducer passageway second end 82. The first transducer passageway first end 80 is operatively connected to the pressure transducer inlet port 60 on the first face 40. In at least one embodiment, the first transducer passageway first end 80 is operatively connected to the pressure transducer inlet port 60 if the pressure transducer inlet port 60 is disposed on the first sidewall 48. In at least one embodiment, the first transducer passageway first end 80 defines the pressure transducer inlet port 60.

The first transducer passageway second end 82 is operatively to the pressure transducer interface 64 that is disposed on the first wall 44. The first transducer passageway second end 82 terminates at and is fluidly connected to the pressure transducer interface 64. In at least one embodiment, the first transducer passageway second end 82 at least partially defines the pressure transducer interface 64.

The second transducer passageway 54 is disposed within and is defined by the heat exchanger body 30. The first transducer passageway 52 may be formed using an additive manufacturing process. The second transducer passageway 54 is spaced apart from the heat exchanger core 32. In at least one embodiment, the second transducer passageway 54 is disposed between the heat exchanger body 30 and the heat exchanger core 32.

The second transducer passageway 54 extends between and fluidly connects the pressure transducer outlet port 62 and the pressure transducer interface 64. As arranged, the second transducer passageway 54 may extend from and along the second face 42 and/or the second sidewall 50 towards and along the first wall 44.

The second transducer passageway 54 extends between a second transducer passageway first end 90 and a second transducer passageway second end 92. The second transducer passageway first end 90 is operatively connected to the pressure transducer outlet port 62 that is disposed on the second face 42. In at least one embodiment, the second transducer passageway first end 90 is operatively connected to the pressure transducer outlet port 62 that is disposed on the second sidewall 50. The second transducer passageway first end 90 is operatively connected to the pressure transducer outlet port 62. In at least one embodiment, the second transducer passageway first end 90 defines the pressure transducer outlet port 62.

The second transducer passageway second end 92 is operatively connected to the pressure transducer interface 64 that is disposed on the first wall 44. The second transducer passageway second end 92 terminates at the pressure transducer interface 64. In at least one embodiment, the second transducer passageway second end 92 at least partially defines the pressure transducer interface 64.

The first transducer passageway 52 and the second transducer passageway 54 interface with the pressure transducer interface 64. The first transducer passageway 52 and the second transducer passageway 54 enable a pressure sensor or monitoring system that is connected to the pressure transducer interface 64 to measure or read a differential pressure across the first face 40 and the second face 42 of the heat exchanger 20. In at least one embodiment, the first transducer passageway 52 and the second transducer passageway 54 enable a pressure sensor or monitoring system that is connected to the pressure transducer interface 64 to measure or read a differential pressure across the first sidewall 48 and the second sidewall 50 of the heat exchanger 20.

The heat exchanger core 32 is disposed within the heat exchanger body 30. The heat exchanger core 32 is spaced apart from the first face 40, the second face 42, the first wall 44, the second wall 46, the first sidewall 48, and the second sidewall 50. The heat exchanger core 32 is spaced apart from the first transducer passageway 52 and the second transducer passageway 54.

The heat exchanger core 32 may have a tube-shell construction. Other configurations of the heat exchanger core 32 are also contemplated such as plate-bar, or the like. The heat exchanger core 32 includes a first portion 100 that is disposed proximate the first end 70 of the heat exchanger body 30 and a second portion 102 that is disposed proximate the second end 72 of the heat exchanger body 30.

A first header 110 and a second header 112 may be disposed at opposite ends of the heat exchanger core 32. The first header 110 defines a fluid inlet 114 that is fluidly connected to the first portion 100 of the heat exchanger core 32. The first header 110 abuts the first end 70 of the heat exchanger body 30.

The second header 112 defines a fluid outlet 116 that is fluidly connected to the second portion 102 of the heat exchanger core 32. The second header 112 abuts the second end 72 of the heat exchanger body 30.

The integration of the first transducer passageway 52, the second transducer passageway 54, the pressure transducer inlet port 60, the pressure transducer outlet port 62, and the pressure transducer interface 64 enable a control system or monitoring system to monitor performance or conditions inside and/or outside of the heat exchanger 20 without the need to add on additional components. The additive build on of the first transducer passageway 52 and the second transducer passageway 54 from the pressure transducer inlet port 60 and the pressure transducer outlet port 62 to the pressure transducer interface 64 reduces the complexity of the pressure sensor.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A heat exchanger for an aircraft, comprising:
a heat exchanger body (30) having a first face (40), a second face (42) disposed opposite the first face, a first wall (44), and a second wall (46) disposed opposite the first wall, the first wall and the second wall each extending between the first face and the second face,
the heat exchanger body is **characterized by**:
a first transducer passageway (52) extending from the first face towards the first wall, and
a second transducer passageway (54) extending from the second face towards the first wall.

2. The heat exchanger of claim 1, wherein the first wall defines a pressure transducer interface (64).

3. The heat exchanger of claim 2, wherein the first transducer passageway has a first transducer passageway first end that is disposed at the first face and a first transducer passageway second end that terminates at the pressure transducer interface.

4. The heat exchanger of claim 3, wherein the first transducer passageway first end defines a pressure transducer inlet port (60).

5. The heat exchanger of claim 4, wherein the second transducer passageway has a second transducer passageway first end that is disposed at the second face and a second transducer passageway second end that terminates at the pressure transducer interface.

6. The heat exchanger of claim 5, wherein the second transducer passageway second end defines a pressure transducer outlet port (62).

7. The heat exchanger of claim 6, wherein the first transducer passageway and the second transducer passageway are fluidly connected to the pressure transducer interface.

8. The heat exchanger of claim 7, further comprising a heat exchanger core (32) disposed within the heat exchanger body.

9. The heat exchanger of claim 8, wherein the first transducer passageway and the second transducer passageway are spaced apart from the heat exchanger core.

10. The heat exchanger of claim 1, further comprising:
a first header (110) defining a fluid inlet (114), the first header abuts a first end of the first face, the second face, and the first wall; and
a second header (112) defining a fluid outlet (116), the second header abuts a second end of the first face, the second face, and the first wall.

## Patentansprüche

1. Wärmetauscher für ein Luftfahrzeug, das Folgendes umfasst:
einen Wärmetauscherkörper (30) mit einer ersten Fläche (40), einer zweiten Fläche (42), die gegenüber der ersten Fläche angeordnet ist, einer ersten Wand (44) und einer zweiten Wand, (46) die gegenüber der ersten Wand angeordnet ist, wobei sich die erste Wand und die zweite Wand zwischen der ersten Fläche und der zweiten Fläche erstrecken,
der Wärmetauscherkörper wird **gekennzeichnet durch**:
einen ersten Wandlerdurchgang (52), der sich von der ersten Fläche in Richtung der ersten Wand erstreckt, und
einen zweiten Wandlerdurchgang (54), der sich von der zweiten Fläche in Richtung der ersten Wand erstreckt.

2. Wärmetauscher nach Anspruch 1, wobei die erste Wand eine Druckwandlerschnittstelle (64) definiert.

3. Wärmetauscher nach Anspruch 2, wobei der erste Wandlerdurchgang ein erstes Ende des ersten Wandlerdurchgangs, das an der ersten Fläche angeordnet ist, und ein zweites Ende des ersten Wandlerdurchgangs aufweist, das an der Druckwandlerschnittstelle endet.

4. Wärmetauscher nach Anspruch 3, wobei das erste Ende des Wandlerdurchgangs eine Einlassöffnung (60) für einen Druckwandler definiert.

5. Wärmetauscher nach Anspruch 4, wobei der zweite Wandlerdurchgang ein erstes Ende des zweiten Wandlerdurchgangs, welches an der zweiten Fläche angeordnet ist, und ein zweites Ende des zweiten Wandlerdurchgangs aufweist, das an der Druckwandlerschnittstelle endet.

6. Wärmetauscher nach Anspruch 5, wobei das zweite Ende des zweiten Wandlerdurchgangs eine Auslassöffnung (62) für einen Druckwandler definiert.

7. Wärmetauscher nach Anspruch 6, wobei der erste Wandlerdurchgang und der zweite Wandlerdurchgang in Fluidverbindung mit der Druckwandlerschnittstelle stehen.

8. Wärmetauscher nach Anspruch 7, der weiterhin einen Wärmetauschkern (32) umfasst, der innerhalb des Gehäuses des Wärmetauschers angeordnet ist.

9. Wärmetauscher nach Anspruch 8, wobei der erste Wandlerdurchgang und der zweite Wandlerdurchgang räumlich vom Wärmetauschkern getrennt sind.

10. Wärmetauscher nach Anspruch 1, der weiterhin Folgendes umfasst:
ein erstes Kopffeld (110), das einen Fluideinlass (114) definiert, wobei das erste Kopffeld an einem ersten Ende der ersten Fläche, der zweiten Fläche und der ersten Wand anliegt; und
ein zweites Kopffeld (112), das einen Fluideinlass (116) definiert, wobei das zweite Kopffeld an einem zweiten Ende der ersten Fläche, der zweiten Fläche und der ersten Wand anliegt.

## Revendications

1. Échangeur de chaleur pour aéronef, comprenant :
un corps d'échangeur de chaleur (30) ayant une première face (40), une seconde face (42) disposée à l'opposé de la première face, une première paroi (44) et une seconde paroi (46) disposée à l'opposé de la première paroi, la première paroi et la seconde paroi s'étendant chacune entre la première face et la seconde face,
le corps d'échangeur de chaleur est **caractérisé par** :
un premier passage de transducteur (52) s'étendant de la première face vers la première paroi, et
un second passage de transducteur (54) s'étendant de la seconde face vers la première paroi.

2. Échangeur de chaleur selon la revendication 1, dans lequel la première paroi définit une interface de transducteur de pression (64).

3. Échangeur de chaleur selon la revendication 2, dans lequel le premier passage de transducteur a une première extrémité de premier passage de transducteur qui est disposée au niveau de la première face et une seconde extrémité de premier passage de transducteur qui se termine au niveau de l'interface de transducteur de pression.

4. Échangeur de chaleur selon la revendication 3, dans lequel la première extrémité de premier passage de transducteur définit un orifice d'entrée de transducteur de pression (60).

5. Échangeur de chaleur selon la revendication 4, dans lequel le second passage de transducteur a une première extrémité de second passage de transducteur qui est disposée au niveau de la seconde face et une seconde extrémité de second passage de transducteur qui se termine au niveau de l'interface de transducteur de pression.

6. Échangeur de chaleur selon la revendication 5, dans lequel la seconde extrémité de second passage de transducteur définit un orifice de sortie de transducteur de pression (62).

7. Échangeur de chaleur selon la revendication 6, dans lequel le premier passage de transducteur et le second passage de transducteur sont reliés fluidiquement à l'interface de transducteur de pression.

8. Échangeur de chaleur selon la revendication 7, comprenant en outre un cœur d'échangeur de chaleur (32) disposé à l'intérieur du corps d'échangeur de chaleur.

9. Échangeur de chaleur selon la revendication 8, dans lequel le premier passage de transducteur et le second passage de transducteur sont écartés du cœur de l'échangeur de chaleur.

10. Échangeur de chaleur selon la revendication 1, comprenant en outre :
un premier collecteur (110) définissant une entrée de fluide (114), le premier collecteur vient en butée contre une première extrémité de la première face, de la seconde face et de la première paroi ; et
un second collecteur (112) définissant une sortie de fluide (116), le second collecteur vient en butée contre une seconde extrémité de la première face, de la seconde face et de la première paroi.
